# NEUE EUROPÄISCHE PATENTSCHRIFT

(11) **EP 3 019 744 B2**
(45) Veröffentlichungstag und Bekanntmachung des Hinweises auf die Entscheidung über den Einspruch: **28.08.2024**
(45) Hinweis auf die Patenterteilung: 04.12.2019
(21) Anmeldenummer: 14735915.2
(22) Anmeldetag: 01.07.2014
(51) Int. Cl.: F03D 80/30, F03D 1/06

(54) **ROTORBLATT MIT BLITZABLEITER**
ROTOR BLADE COMPRISING A LIGHTNING CONDUCTOR
PALE DE ROTOR AVEC PARATONNERRE

(30) Priorität: 10.07.2013 DE 102013107296
(43) Veröffentlichungstag der Anmeldung: 18.05.2016
(73) Patentinhaber: Siemens Gamesa Renewable Energy Service GmbH, 20097 Hamburg (DE)
(72) Erfinder: FLACH, Christian, 24783 Osterrönfeld (DE)
(74) Vertreter: Groth, Wieland
(86) Internationale Anmeldenummer: PCT/EP2014/063911
(87) Internationale Veröffentlichungsnummer: WO 2015/003953

(56) Entgegenhaltungen:
- EP-A1- 1 826 402
- WO-A1-2010/100283
- DE-B3- 102011 105 228
- US-A1- 2011 243 737

## Beschreibung

Die Erfindung betrifft ein Rotorblatt und ein Verfahren zur Herstellung des Rotorblattes.

Rotorblätter mit Blitzableitkabeln sind im Stand der Technik hinlänglich bekannt. Aus der US 2009/0257881 A1 ist ein Rotorblatt, umfassend eine Rotorblatthinterkante, in die Aluminiumblöcke eingebracht sind, mit in Richtung der Druck- und Saugseite abstehenden Rezeptoren offenbart. Von dem Aluminiumblock geht ein Nebenleiter zum Hauptleiter ab. Die Leiter sind in die Rotorblatthalbschale einlaminiert.

Aus der WO 2010/100283 A1 ist ein Windturbinenblatt mit einem Blitzschutzsystem bekannt, in dem ein Blitzableiter mit einem Blitzrezeptor verbunden ist. Entlang der Rotorblatthinterkante und entlang der Rotorblattvorderkante leitende Schichten vorgesehen, gegenüber denen der Blitzableiter isoliert ist.

In der EP 1 826 402 A1 ist offenbart, dass ein Hauptkabel auf gleichem Potential mit einem Carbon-Faser-Laminat an verschiedenen Stellen des Blattes ausgebildet ist.

In der DE 10 2011 105 228 B3 ist ein Laminat aus einem Fasermaterial und Kunststoff und einer in das Laminat eingebetteten elektrischen Leitung offenbart. Die Leitung ist direkt auf einer Rotorblattaußenhaut oder einem Steg verlegt.

In der US 2011/0243737 A1 ist ein Dreifachhaltesystem für Blitzableitkabel offenbart.

Aus der EP 0 783 629 B1 ist ein Rotorblatt mit einem Blitzableitkabel bekannt, wobei sich ein Leiter entlang der Längsachse des Rotorblattes erstreckt und mit einer nach außen abstehenden leitenden Spitze in Verbindung steht.

In der US 2008/0095624 A1 ist ein Rotorblatt mit einer Blitzableiteinrichtung offenbart, wobei der Rezeptor mit einem Ableiter verbunden ist und der Ableiter mit einer dielektrischen Schicht überdeckt ist.

In der WO 2007/062659 A1 ist ein Rotorblatt mit einer Blitzableiteinrichtung offenbart, wobei an der Rotorblattspitze ein Blitzrezeptor angeordnet ist, von dem ein Blitzableitkabel abgeht.

In der EP 1 965 076 A1 ist eine Blitzschutzeinrichtung mit einem Rotorblatt offenbart, an dessen Spitze ein Rezeptor offenbart ist, von dem Ableitkabel abgehen.

Die US 2008/0193292 A1 betrifft ein Rotorblatt mit einem elektrisch leitenden Tip, das mit einem Kabel verschraubt ist, über das der Blitz abgeführt werden kann.

Aus der EP 2 532 883 A2 ist ein Windenergieanlagenbauteil bekannt mit einem Laminat aus einem Fasermaterial und Kunststoff und einer in das Laminat eingebetteten elektrischen Leitung, wobei an einer Seitenfläche der elektrischen Leitung ein Profil angeordnet ist, das einer Bildung eines Hohlraums oder Kunststoffnests zwischen der Seitenfläche und einer eine Oberseite der elektrischen Leitung überdeckenden Fasermateriallage bei der Fertigung des Laminats entgegenwirkt.

In der DE 10 2005 017 865 B4 ist ein Blitzschutzsystem mit einem Rotorblatt und einem Wartungssystem zur Wartung einer Blitzschutzeinrichtung offenbart.

Die im Stand der Technik offenbarten Blitzschutzsysteme sind entweder technisch aufwendig in der Konstruktion oder die Blitzableitkabel sind sehr gekrümmt geführt, so dass leicht Blitzüberschläge entstehen können.

Es ist Aufgabe der vorliegenden Erfindung, ein Rotorblatt mit einem Blitzschutzsystem zur Verfügung zu stellen sowie ein Herstellungsverfahren dafür, die die oben genannten Nachteile überwinden.

Diese Aufgabe wird in ihrem ersten Aspekt durch ein eingangs genanntes Rotorblatt mit den Merkmalen des Anspruchs 1 erfüllt.

Das erfindungsgemäße Rotorblatt weist einen Steg mit einem tipseitigen Stegende und ein entlang dem Steg verlaufendes Blitzableitkabel auf, wobei das Blitzableitkabel mit einem Ende mit einem Blitzrezeptor elektrisch leitend verbunden ist und das Blitzableitkabel von einer Abgangsstelle am Steg vorzugsweise am tipseitigen Stegende abgeht. Erfindungsgemäß wird der Abschnitt des Blitzableitkabels zwischen dem tipseitigen Stegende und dem Blitzrezeptor mittels wenigstens einer an einer Rotorblattinnenwandung angeordneten Führung geführt. Das tipseitige Stegende endet ein Stück weit vor der Rotorblattspitze. Die wenigstens eine Führung ermöglicht es, dass der Abschnitt des Blitzableitkabels nicht frei zwischen der Abgangsstelle am Steg und dem Blitzrezeptor verläuft. Ohne die erfindungsgemäße Führung würde der Abschnitt des Blitzableitkabels im Betrieb gegen die Innenwandung der Rotorblattschale schlagen oder sich während des Betriebs krümmen, und dadurch könnte es bei Einschlag eines Blitzes zu einem Übersprung des Blitzstromes kommen

In einer bevorzugten Ausführungsform des erfindungsgemäßen Rotorblattes ist entlang einer Hauptleitung des Blitzableitkabels wenigstens eine Verteilerstelle vorgesehen, und von der Verteilerstelle geht ein Nebenleiter des Blitzableitkabels zu wenigstens einem weiteren Blitzrezeptor ab, und wenigstens eine weitere Führung ist zwischen der wenigstens einen Verteilerstelle und dem wenigstens einen weiteren Blitzrezeptor angeordnet. Die Führung und die wenigstens eine weitere Führung werden im Weiteren auch als wenigstens eine Führung bezeichnet. Sie können gleich ausgebildet sein.

Da ein Blitz zwar vorwiegend, aber nicht ausschließlich in der Rotorblattspitze einschlägt, sind erfindungsgemäß weitere Blitzrezeptoren vorgesehen, die vorzugsweise entlang der Rotorblatthinterkante angeordnet sind, wobei die Abschnitte der Nebenleitung der Blitzableitkabel zwischen der Verteilerstelle und dem Blitzrezeptor erfindungsgemäß jeweils in einer Führung angeordnet sind, um eine stabile Befestigung und Führung des Abschnittes des Nebenleiters zu ermöglichen und die oben genannten Nachteile zu vermeiden.

Die Führung kann auf verschiedene Weise ausgebildet sein.

Erfindungsgemäß weist die Führung ein Führungsbauteil mit einem Befestigungsmittel zur Befestigung des Abschnitts des Blitzableitkabels auf. Das Führungsbauteil kann verschieden ausgebildet sein. Das Befestigungsmittel kann als Nut oder Manschette ausgebildet sein. Es weist vorzugsweise ein PVC-Schaumstück auf oder es ist aus einem PVC-Schaumstück gebildet. Das Führungsbauteil muss aus einem Material gefertigt sein, das auch bei starken nicht geschädigt oder unbrauchbar wird und auch nicht schmilzt oder sich selbst entzündet. Unter starken Temperaturerhöhen sind hier Erhöhungen der Temperaturen bis etwa 1100°C, was etwas über der Schmelztemperatur von Kupfer liegt, vorzugsweise bis 1500°C gemeint.

Vorzugsweise ist eine Gewebelage, insbesondere eine Laminatlage, eine Glasfaserlage oder eine andere Lage rotorblattinnenseitig der Nut angeordnet, die den mit dem Befestigungsmittel befestigten, vorzugsweise in der Nut angeordneten oder der Manschette gehaltenen Abschnitt des Blitzableitkabels vollständig abdeckt. Durch die Laminatlage wird das Blitzableitkabel somit fest am Befestigungsmittel fixiert.

In einer besonders bevorzugten Weiterbildung der Erfindung ist die wenigstens eine Führung als separates Bauteil mit dem Führungsbauteil mit dem Befestigungsmittel und dem mit dem Befestigungsmittel befestigten Abschnitt des Blitzableitkabels ausgebildet, wobei eine dem Befestigungsmittel gegenüberliegende Klebschicht zum Aufbringen auf die Rotorblattinnenwandung vorgesehen ist und eine den Abschnitt des Blitzableitkabels und das Führungsbauteil abdeckende Laminatlage ausgebildet ist. Das separate Bauteil kann sowohl den Abschnitt der Hauptleitung des Blitzableitkabels als auch einen Abschnitt der Nebenleitung des Blitzableitkabels an der Rotorblattinnenwandung fixieren. Es kann bei Beschädigungen vorteilhafterweise relativ leicht ausgewechselt werden, und es ist in der Herstellung kostengünstig, da es nicht in das Herstellungsverfahren des Rotorblattes integral eingebunden ist.

In einer anderen Weiterbildung der Erfindung ist die Führung mit einer Laminatlage überzogen, die sich über die Führung hinaus durchgehend auch entlang der Rotorblattinnenwandung erstreckt. Bei dieser Ausführungsform der Erfindung ist die Führung nicht als separates Bauteil ausgebildet, sondern wird während des eigentlichen Herstellungsverfahrens des Rotorblattes mit in die Rotorblattinnenwandung integriert. Die Laminatlage überzieht vorzugsweise das Führungsbauteil mit dem in der Nut aufgenommenen Abschnitt des Blitzableitkabels vollständig und ist über die Führung hinaus als Laminatlage der Rotorblattinnenwandung ausgebildet.

Erfindungsgemäß ist in der Führung zwischen dem Abschnitt des Blitzableitkabels und der Rotorblattinnenwandung entlang dem gesamten Abschnitt des Blitzableitkabels ein Isolator vorgesehen. Der Isolator ist dazu bestimmt, ein Überschlagen des Blitzstromes nach einem Blitzeinschlag in das Laminat der Rotorblattschale zu verhindern.

In einer nicht erfindungsgemäßen Ausführungsform ist zwischen dem Führungsbauteil und einer Rotorblattinnenwandung eine Klebschicht angeordnet, und zwischen dem Abschnitt des Blitzableitkabels und einer gegenüberliegenden Rotorblattinnenwandung ist eine der Klebschicht gegenüberliegende Klebschicht angeordnet. Bei dieser Ausführungsform der Erfindung ist die Führung nicht nur an einer einzigen Rotorblattinnenwandung, sondern an den beiden sich gegenüberliegenden Rotorblattinnenwandungen befestigt, vorzugsweise festgeklebt, so dass das Blitzableitkabel besonders fest im Rotorblatt verankert und geführt ist.

Günstigerweise ist der Rezeptor als Rotorblattspitze ausgebildet und vorzugsweise als metallische Rotorblattspitze ausgebildet, und er weist rotorblattinnenseitig eine Adapterrippe auf, mit der das Ende des Blitzableitkabels elektrisch leitend verbunden ist.

Bei dieser Ausführungsform der Erfindung kann nach einem Blitzeinschlag und der Beschädigung des Rezeptors der Rezeptor leicht ausgewechselt werden.

Die Aufgabe wird in ihrem zweiten Aspekt durch ein Verfahren zur Fertigung eines Rotorblattes gemäß Anspruch 8 gelöst.

Das Befestigungsmittel ist vorzugsweise als Nut ausgebildet.

Durch die Fertigung des Rotorblattes mit einer Führung kann ein aufwendiger Fräsvorgang einer Nut in das Laminat der Rotorblattinnenwandung vermieden werden, der die Stabilität des Rotorblattes verringern würde.

Das während des Fertigungsvorganges hergestellte Führungsbauteil kann innenseitig auf die Rotorblattinnenwandung aufgebracht werden. In einer Ausführungsform des Verfahrens wird das Führungsbauteil auf die Innenwandung des Rotorblattes aufgebracht und danach vollständig überlaminiert, so dass das Führungsbauteil integraler Bestandteil der Rotorblattschale wird. In einer anderen Ausführungsform des erfindungsgemäßen Verfahrens werden das Führungsbauteil und der Abschnitt des Blitzableitkabels als separates Bauteil gefertigt, und das Führungsbauteil wird mit einer Klebschicht versehen, und die Klebschicht und das separate Führungsbauteil werden dann mit der Klebschicht auf die Innenwandung der Rotorblattschale aufgeklebt. Günstigerweise werden bei der Herstellung der Rotorblattschale Markierungen an der Innenwandung der Rotorblattschale vorgesehen, auf die das separate Führungsbauteil geklebt werden kann.

Die Erfindung wird anhand von mehreren Ausführungsbeispielen in sechs Figuren beschrieben. Dabei zeigen:
- Fig. 1: eine Innenansicht eines Tips eines Rotorblattes mit erfindungsgemäßer Führung eines Hauptleiters des Blitzableitkabels,
- Fig. 2: einen Abschnitt eines Rotorblattes mit einem Anschlussknoten eines Nebenleiters des Blitzableitkabels und einer Führung,
- Fig. 3: eine Schnittansicht einer Führung in einer ersten Ausführungsform,
- Fig. 4: eine Schnittansicht einer Führung in einer zweiten Ausführungsform,
- Fig. 5: eine Schnittansicht einer Führung in einer dritten Ausführungsform,
- Fig. 6: eine Schnittansicht einer Führung in einer vierten nicht erfindungsgemäßen Ausführungsform.

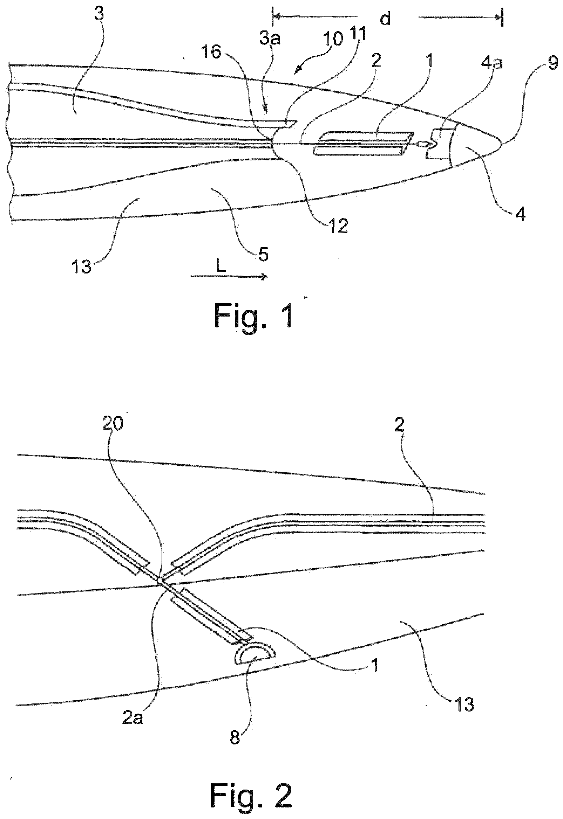

Fig. 1 zeigt eine perspektivisch dargestellte Teil-Innenansicht eines Tipabschnitts eines Rotorblattes 10. Im Inneren des Rotorblattes 10 verläuft ein Steg 3 von der (nicht dargestellten) Rotorblattwurzel bis in einen Tipbereich des Rotorblattes 10. Von der Rotorblattwurzel ausgehend endet der Steg 3 in einem Abstand d vor dem Tip 9. Der Steg 3 ist zwischen zwei an sich gegenüberliegenden Rotorblatthalbschalen 13 angeordneten Hauptgurten 11, 12 befestigt. Die beiden Hauptgurte 11, 12 sind in Längsrichtung L verlaufend jeweils an eine Innenseite einer Rotorblattschale 5 geklebt. Die Rotorblattschale 5 umfasst zwei miteinander verklebte Rotorblatthalbschalen 13. In Fig. 1 ist nur eine der beiden Rotorblatthalbschalen 13 dargestellt.

Die Rotorblatthalbschalen 13 wie auch der Steg 3 und die beiden Hauptgurte 11, 12 weisen vorzugsweise Laminate auf, besonders bevorzugt bestehen alle oder einige der genannten Bauteile aus Laminat. Die Laminate sind mehrschichtige, mit Harz infundierte und dann ausgehärtete, vorzugsweise Gewebe- oder Glasfaserlagen, die Karbonanteile oder -lagen aufweisen können.

Der in Fig. 1 dargestellte Steg 3 verläuft im Wesentlichen entlang einer Längsrichtung L des Rotorblattes 10. Die beiden Hauptgurte 11, 12 verlaufen sich exakt parallel gegenüberliegend entlang der Innenseiten der beiden sich gegenüberliegenden Rotorblatthalbschalen 13, während der Steg 3 mit seinen beiden schmalen Längsseiten auf den beiden Innenseiten der beiden Hauptgurte 11, 12 aufgeklebt ist. Die beiden breiten Längsseiten des Stegs 3 verlaufen senkrecht zu den beiden Innenseiten der beiden Hauptgurte 11, 12.

Üblicherweise werden die Gurte 11, 12 und der Steg 3 als separate Bauteile in jeweils einem eigenen Laminierverfahren hergestellt. Nachdem die Laminierverfahren beendet sind, wird eine entlang der Längsrichtung L entlang des Stegs 3 verlaufende Nut in das Laminat des Stegs 3 gefräst. Die Nut verläuft in Fig. 1 entlang der neutralen Phase des Stegs 3. Sie ist entlang ihrer gesamten Länge von den beiden Hauptgurten 11, 12 jeweils gleich weit beabstandet.

Die gefräste Nut dient nach dem vollständigen Zusammenbau des Rotorblattes 10 als Führungskanal für einen Hauptleiter 2 des Blitzableitkabels. Die Nut ist entlang der gesamten Länge des Stegs 3 gerade und krümmungsfrei ausgeführt. Der Hauptleiter 2 wird in die Nut eingeklebt und laminiert.

Da der Steg 3 gemäß Fig. 1 im Abstand d vor dem Tip 9 endet, ist das entlang einer Nut 31 verlegte Blitzableitkabel am tipseitigen Ende des Stegs 3 an einer Abgangsstelle 16 aus der Nut herausgeführt und gerade verlaufend zu einem als Blattspitze ausgebildeten Rezeptor 4 geführt. Das Blitzableitkabel ist über eine Adapterrippe 4a am Rezeptor 4 stromleitend befestigt.

In dem Bereich zwischen dem tipseitigen Ende des Stegs 3 sowie dem stegseitigen Ende der Adapterrippe 4a ist eine erfindungsgemäße Führung 1 vorgesehen, entlang derer ein Abschnitt der Hauptleitung 2 des Blitzableitkabels verläuft. Das zwischen dem Rezeptor 4 am Tip 9 und der Abgangsstelle 16 am Steg 3 und weiter entlang der Nut des Stegs 3 verlaufende Blitzableitkabel ist der Hauptleiter 2. Es können zusätzlich oder statt des Hauptleiters 2 auch Nebenleiter 2a vorgesehen sein, wobei letztere mit dem Hauptleiter 2 in Verbindung stehen.

Die Führung 1 kann verschieden ausgebildet sein. Die Führung 1 erhebt sich rotorblattinnenseitig über die Rotorblattinnenwandung. Die Führung ist mit der einen Rotorblatthalbschale 13 verbunden. Die Führung 1 ist mit der Rotorblattinnenwandung dauerhaft und fest verbunden, beispielsweise ist sie in die Innenwandung der Rotorblatthalbschale 13 einlaminiert, aufgeklebt oder Ähnliches. Die Verbindung zwischen der Führung 1 und der Rotorblattinnenwandung ist so fest, dass sie auch den bei einem Blitzeinschlag auftretenden Lasten und Kräften, die durch die Stromleitung durch das Blitzleitkabel erzeugt werden, standhält.

Der Hauptleiter 2 ist mit der Adapterrippe 4a mit dem Rezeptor 4 elektrisch leitend verbunden. Die elektrische Verbindung der Adapterrippe 4a mit dem Rezeptor 4 ist als Schraubverbindung ausgebildet. Dadurch kann eine Beschädigung des Rezeptors 4 nach einem Blitzeinschlag behoben werden, indem der Rezeptor 4 und die Adapterrippe 4a vom Hauptleiter 2 abgeschraubt werden und der Rezeptor durch einen intakten Rezeptor 4 ersetzt wird und beide Bauteile wieder angeschraubt werden.

In der Ausführungsform gemäß Fig. 2 des erfindungsgemäßen Rotorblattes 10 sind nicht nur an der Blattspitze Rezeptoren 4 vorgesehen, die einen einschlagenden Blitz aufnehmen und ableiten, sondern es sind auch oder stattdessen entlang vorzugsweise einer Hinterkante des Rotorblattes 10 weitere Rezeptorklötze 8 angeordnet. Die Rezeptorklötze 8 sind durch die Rotorblattschale 5 hindurchgeführt, sie weisen eine mit einer Außenwandung der Rotorblattschale 5 fluchtende metallische Fläche auf, die metallisch bis zur Innenwandung der Rotorblattschale 5 hindurchgeführt ist, damit ein einschlagender Blitz mittels des Rezeptorklotzes 8 durch die Rotorblattschale 5 hindurchgeleitet werden kann. An der Rotorblattinnenseite des Rezeptorklotzes 8 ist ein Anschluss für den Nebenleiter 2a vorgesehen. Die Nebenleiter 2a leiten den in den Rezeptorklotz 8 einschlagenden Blitz ab.

Der vom Rezeptorklotz 8 abgehende Nebenleiter 2a ist elektrisch leitend an den von der Rotorblattspitze kommenden Hauptleiter 2 angeschlossen. Der Anschluss kann in Form eines Anschlussknotens, einer Verteilerstelle 20 o. Ä. ausgebildet sein.

Fig. 2 zeigt den Abschnitt der Länge d in Fig. 1 zwischen dem (nicht eingezeichneten tipseitigen Stegende 3a und dem (nicht eingezeichneten) Rezeptor 4. Wie Fig. 2 zeigt, ist der Hauptleiter 2 zwischen dem tipseitigen Stegende 3a und dem Tip 9 verlaufend im Bereich der Verteilerstelle 20 U-förmig gekrümmt ausgeformt ist. Der Verteilerknoten 20 ist auf der Innenseite der Rotorblatthalbschale 13 angeordnet, und der vom Hauptleiter 2 an der Verteilerstelle 20 abgehende Nebenleiter 2a liegt innenseitig der Innenwandung der Rotorblatthalbschale 13 auf. Der Nebenleiter 2a ist von der Verteilerstelle 20 mittels einer erfindungsgemäßen Führung 1 zum Rezeptorklotz 8 geführt. Der Rezeptorklotz 8 des Nebenleiters 2a kann ähnlich oder bis auf geometrische Ausformungen genauso ausgebildet sein wie der Rezeptor 4 der Blattspitze des Hauptleiters 2 gem. Fig. 1.

Es ist auch vorstellbar, dass der Hauptleiter 2 nicht entlang der neutralen Phase des Steges 3 verläuft, sondern vorzugsweise entlang seiner gesamten oder des größten Teils seiner Länge wenige Zentimeter innenseitig beabstandet von einer der Innenseiten der Rotorblatthalbschale 13 verläuft. Das Rotorblatt 10 weist dann keine Verschwingung an der Verteilerstelle 20 gemäß Fig. 2 auf.

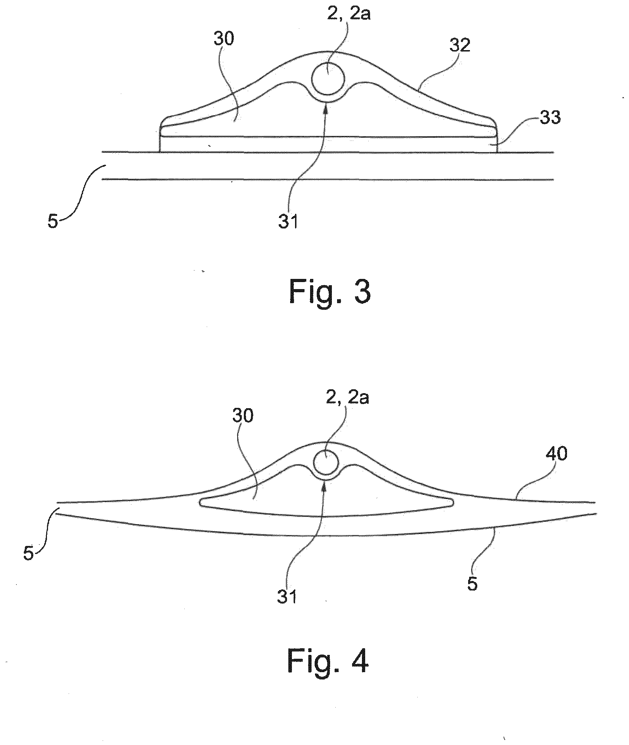

Fig. 3 zeigt eine Ausführungsform der Führung 1 in einer Schnittansicht. Die Führung 1 umfasst ein gefrästes PVC-Schaumstück 30, das die Nut 31 umfasst. Entlang der Nut 31 verläuft ein Abschnitt des Hauptleiters 2 oder des Nebenleiters 2a des Blitzableitkabels. In der Ausführungsform gem. Fig. 3 ist das Schaumstück 30 mit eingelegtem Blitzableitkabel 2, 2a mit einer oder mehreren Glasfaserlagen 32 überlaminiert und mittels einer Klebschicht 33 auf die Innenseite einer der Rotorblatthalbschalen 13 aufgeklebt. Auf diese Weise kann die Führung 1 mit einem eingelegten Blitzableitkabel 2, 2a als fertige Einheit vorkonfektioniert sein. Die Klebschicht 33 ist auf der vorkonfektionierten Führung 1 angeordnet und durch eine abziehbare Folie 34 geschützt. Die Klebschicht 33 kann aber auch alternativ erst direkt vor dem eigentlichen Klebevorgang der Führung 1 auf die Innenwandung der Rotorblatthalbschale 13 aufgebracht werden. Der Kleber der Klebschicht 33 muss die Führung 1 fest auf die Innenwand der Rotorblattschale 5 kleben, da bei einem Stromdurchfluss nach einem Blitzeinschlag sehr starke Kräfte auf die Führung 1 einwirken. Des Weiteren kommt es zu einer sehr starken Wärmeentwicklung und Temperaturerhöhung durch das Ableiten des Blitzstromes nach einem Blitzeinschlag im Blitzableitkabel 2, 2a. Die Führung 1 muss daher aus einem Material oder Materialien gefertigt sein, das/die durch Temperaturerhöhung bis zu ca. 1500°C nicht geschädigt oder unbrauchbar wird/werden. Das Material darf nicht schmelzen oder sich selbst entzünden. Günstigerweise befinden sich auf der Innenwand der Rotorblattschale 5 Markierungen, die den Werkern die Verlegung und die Verklebung der Führung 1 auf der Innenwandung der Rotorblatthalbschale 13 erleichtern. Markierungen können farbige Linien oder Kerben sein, die schon bei Fertigung der Rotorblatthalbschalen 13 in die Rotorblatthalbschalen 13 eingebracht werden.

Fig. 4 zeigt eine zweite Ausführungsform einer Führung 1 im Schnitt. Das PVC-Schaumstück 30 der Führung 1 wird bereits während der Fertigung der Rotorblattschale 5 in die Rotorblattschale 5 eingebracht. Dabei wird ein PVC-Schaumstück 30 mit der Nut 31 versehen und innenseitig auf das Halbzeug der Rotorblattschale 5 gelegt und ein Abschnitt des Blitzableitkabels 2, 2a in die Nut 31 des PVC-Schaumstücks 30 eingelegt und beide Bauteile danach mit wenigstens einer weiteren Gewebelage 40, insbesondere wenigstens einer Glasfaserlage überlaminiert. Die Gewebelage 40 wird mit Harz getränkt. Das Aufbringen der Führung 1 wird also in einen Infusionsprozess integriert. Während der Fertigung der Rotorblatthalbschale 13 wird die Führung 1 vollständig überlaminiert. Die Führung 1 ist nicht ein separates Bauteil wie in Fig. 3, sondern in die Rotorblattschale 5 integriert. Die zusätzliche Klebschicht 33, wie in der Ausführungsform gem. Fig. 3, ist nicht notwendig.

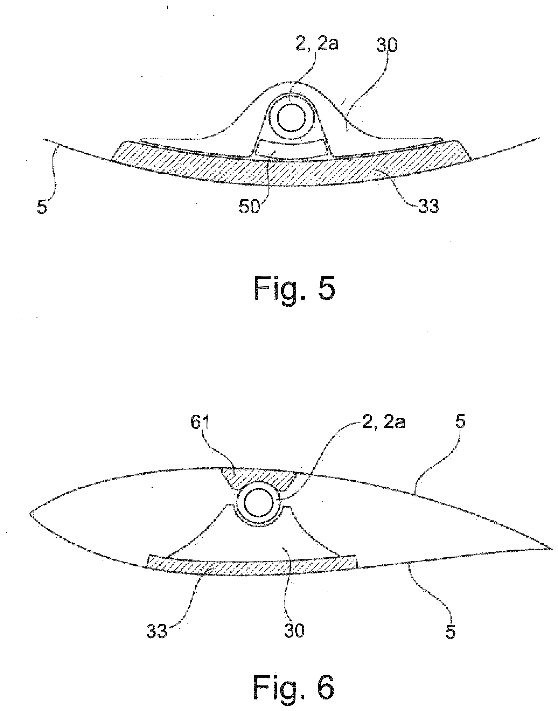

Fig. 5 zeigt eine Ausführungsform der erfindungsgemäßen-Führung 1 in einem Schnitt. Dabei umfasst die Führung 1 einen Isolator 50. Der Isolator 50 ist zwischen dem Blitzableitkabel 2, 2a und der Klebschicht 33 angeordnet. Das PVC-Schaumstück 30 ist dabei rotorblattinnenseitig des Blitzableitkabels 2, 2a vorgesehen und wird gleichsam kuppelartig über das Blitzableitkabel 2, 2a gelegt und mittels der Klebschicht 33 zusammen mit dem Isolator 50 auf die Innenwandung der Rotorblattschale 5 aufgeklebt. Der Isolator 50 sorgt dafür, dass der Blitz bei einem Blitzeinschlag nicht durch das Laminat der Rotorblattschale 5 wandert und das Laminat beschädigt.

Es ist grundsätzlich auch denkbar, dass der Isolator 50 zwischen Blitzableitkabel 2, 2a und Schaumstück 30 angeordnet ist und rotorblattinnenseitig eine separate Laminatschicht 32 oder integrale Laminatschicht 40 vorgesehen ist. Die Führung 1 kann auch hier als separates Bauteil ausgebildet sein.

Fig. 6 zeigt eine nicht erfindungsgemäße vierte Ausführungsform der Führung 1 in einem Schnitt. Dabei ist wiederum das PVC-Schaumstück 30 vorgesehen, das auf eine Innenseite einer der beiden Rotorblatthalbschalen 13, hier der Druckseite der Rotorblatthalbschale 13 geklebt ist. Eine Höhe des Schaumstücks 30 ist so bemessen, dass ein in die Nut 31 des PVC-Schaumstücks 30 eingelegtes Blitzableitkabel 2, 2a mit seiner dem PVC-Schaumstück 30 abgewandten Seite auf die gegenüberliegende Innenwandung der Rotorblatthalbschale 13 geklebt werden kann, so dass PVC-Schaumstück 30 und Blitzableitkabel 2, 2a zwischen zwei Klebschichten 33, 61 im Bereich der Rotorblattspitze oder entlang dem Hinterkantenbereich der Rotorblattschale 5 sowohl mit der Druck- als auch mit der Saugseitenhalbschale des Rotorblattes 10 verklebt sind.

### Bezugszeichenliste

- 1: Führung
- 2: Hauptleiter
- 2a: Nebenleiter
- 3: Steg
- 3a: tipseitiges Stegende
- 4: Rezeptor
- 4a: Adapterrippe
- 5: Rotorblattschale
- 8: Rezeptorklotz
- 9: Tip
- 10: Rotorblatt
- 11: Hauptgurt
- 12: Hauptgurt
- 13: Rotorblatthalbschale

- 16: Abgangsstelle
- 20: Verteilerstelle
- 30: PVC-Schaumstück
- 31: Nut
- 32: separate Laminatschicht
- 33: Klebschicht
- 40: integrale Laminatschicht
- 50: Isolator
- 61: Klebschicht

- d: Abstand
- L: Längsrichtung

## Patentansprüche

1. Rotorblatt mit
einem Steg (3) mit einem tipseitigen Stegende (3a) und
einem entlang dem Steg (3) verlaufenden Blitzableitkabel (2, 2a), das mit einem Ende mit einem Rezeptor (4, 8) elektrisch leitend verbunden ist, und
einer Abgangsstelle (16, 20) am tipseitigen Stegende (3a), von der das Blitzableitkabel (2, 2a) von dem Steg (3) abgeht,
wobei an einer Innenwandung des Rotorblatts (10) eine Führung zwischen dem tipseitigen Stegende (3a) und dem Blitzrezeptor (4, 8) angeordnet ist, entlang derer ein Abschnitt des Blitzableitkabels (2, 2a) verläuft, **dadurch gekennzeichnet, dass** in der Führung (1) zwischen dem Abschnitt des Blitzableitkabels (2, 2a) und der Rotorblattinnenwandung entlang dem gesamten Abschnitt des Blitzableitkabels (2, 2a) ein Isolator (50) vorgesehen ist und die Führung (1) ein Führungsbauteil (30) mit einem Befestigungsmittel (31) zur Aufnahme des Abschnitts des Blitzableitkabels (2, 2a) aufweist.

2. Rotorblatt nach Anspruch 1,
**dadurch gekennzeichnet, dass** entlang einer Hauptleitung (2) des Blitzableitkabels wenigstens eine Verteilerstelle (20) vorgesehen ist und von der Verteilerstelle (20) ein Nebenleiter (2a) des Blitzableitkabels zu wenigstens einem weiteren Blitzrezeptor (8) abgeht und wenigstens eine weitere Führung (1) zwischen der wenigstens einen Verteilerstelle (20) und dem wenigstens einen weiteren Blitzrezeptor (8) angeordnet ist.

3. Rotorblatt nach Anspruch 1 oder 2,
**dadurch gekennzeichnet, dass** der Blitzrezeptor (4) an einer Rotorblattspitze und/oder die weiteren Blitzrezeptoren (8) entlang einer Rotorblatthinterkante angeordnet sind.

4. Rotorblatt nach Anspruch 1,
**gekennzeichnet durch** wenigstens eine rotorblattinnenseitig des Befestigungsmittels (31) angeordnete Laminatschicht (32, 40), die den mit dem Befestigungsmittel (31) befestigten Abschnitt des Blitzableitkabels (2,2a) vollständig abdeckt.

5. Rotorblatt nach einem der vorstehenden Ansprüche,
**dadurch gekennzeichnet, dass** die wenigstens eine Führung (1) als separates Bauteil mit dem Führungsbauteil (30), mit dem Befestigungsmittel (31) und dem mit dem Befestigungsmittel (31) befestigten Blitzableitkabels (2, 2a) und einer dem Befestigungsmittel (31) gegenüberliegenden Klebschicht (33) zum Aufbringen auf die Rotorblattinnenwandung und einer den Abschnitt des Blitzableitkabels (2, 2a) und das Führungsbauteil (30) abdeckenden separaten Laminatschicht (32) ausgebildet ist.

6. Rotorblatt nach einem der vorstehenden Ansprüche,
**dadurch gekennzeichnet, dass** die wenigstens eine Führung (1) mit einer integralen Laminatschicht (40) überzogen ist, die sich über die Führung (1) hinaus durchgehend auch entlang der Rotorblattinnenwandung erstreckt.

7. Rotorblatt nach einem der vorstehenden Ansprüche,
**dadurch gekennzeichnet, dass** der Rezeptor (4) als Rotorblattspitze ausgebildet ist und rotorblattinnenseitig eine Adapterrippe (4a) aufweist, mit der das Ende des Blitzableitkabels (2, 2a) elektrisch leitend verbunden ist.

8. Verfahren zur Fertigung eines Rotorblattes nach einem der Ansprüche 1 bis 7, indem eine Rotorblattschale (5) gefertigt wird,
das Führungsbauteil (30) mit dem Befestigungsmittel (31) versehen wird,
der Abschnitt des Blitzableitkabels (2,2a) in das Befestigungsmittel (31) eingebracht wird,
das Führungsbauteil (30) mit dem Blitzableitkabel (2, 2a) auf die Innenwandung der Rotorblattschale (5) aufgebracht wird und in der Führung (1) zwischen dem Abschnitt des Blitzableitkabels (2, 2a) und der Rotorblattinnenwandung entlang dem gesamten Abschnitt des Blitzableitkabels (2, 2a) der Isolator (50) vorgesehen wird.

9. Verfahren nach Anspruch 8,
**dadurch gekennzeichnet, dass** das Führungsbauteil (30) mit dem Abschnitt des Blitzableitkabels (2, 2a) überlaminiert wird und das Laminat als integrale Laminatschicht (40) in die Rotorblattschale (5) hinein ausgeformt wird.

10. Verfahren nach Anspruch 8,
**dadurch gekennzeichnet, dass** das Führungsbauteil (30) und der Abschnitt des Blitzableitkabels (2, 2a) als separates Bauteil gefertigt werden und mit einer Klebschicht (33) versehen werden und dann mit der Klebschicht (33) auf die Innenwandung der Rotorblattschale (5) aufgeklebt werden, wobei der Isolator (50) zwischen dem Blitzableitkabel (2, 2a) und der Klebschicht (33) angeordnet wird.

11. Verfahren nach Anspruch 10,
**dadurch gekennzeichnet, dass** die Innenwandung der Rotorblattschale (5) mit Markierungen versehen wird, mit deren Hilfe das separate Bauteil an einer vorbestimmten Position auf die Innenwandung aufgeklebt wird.

## Claims

1. Rotor blade with a web (3) with a tipsided web end (3a) and a lightning conductor cable (2, 2a) which extends along the web (3) and is electrically conductively connected with an end with a lightning receptor (4, 8), and an origin point (16, 20) at the tipsided end of the fillet (3a), from which the lightning conductor cable (2, 2a) extends from the fillet (3), wherein a guide (1), along which a portion of the lightning conductor cable (2, 2a) extends, is arranged on an inner wall of the rotor blade (10) between the tipsided fillet end (3a) and the lightning receptor (4, 8), **characterised in that** an insulator (50) is provided in the guide (1) between the portion of the lightning conductor cable (2, 2a) and the rotor blade inner wall along the entire portion of the lightning conductor cable (2, 2a) and the guide (1) has a guide component (30) with a fastening means (31) to receive the portion of the lightning conductor cable (2, 2a).

2. Rotor blade according to claim 1, **characterised in that** at least one distributor point (20) is provided along a main line (2) of the lightning conductor cable, and an auxiliary line (2a) of the lightning conductor cable extends from the distributor point (20) to at least one further lightning receptor (8) and at least one further guide (1) is arranged between the at least one distributor point (20) and the at least one further lightning receptor (8).

3. Rotor blade according to claim 1 or 2, **characterised in that** the lightning receptor (4) is arranged on a rotor blade tip and/or the further lightning receptors (8) are arranged along a rotor blade trailing edge.

4. Rotor blade according to claim 1, **characterised by** at least one laminate layer (32, 40) at the rotor blade inner side which is arranged on the fastening means (31) and completely covers the portion of the lightning conductor cable (2, 2a) fastened by the fastening means (31).

5. Rotor blade according to one of the preceding claims, **characterised in that** the at least one guide (1) is constructed as a separate component with the guide component (30), with the fastening means (31) and the lightning conductor cable (2, 2a) fastened by the fastening means (31) and an adhesive layer (33) opposite the fastening means (31) for application to the rotor blade inner wall and a separate laminate layer (32) covering the portion of the lightning conductor cable (2, 2a) and the guide component (30).

6. Rotor blade according to one of the preceding claims, **characterised in that** the at least one guide (1) is coated with an integral laminate layer (40) which extends beyond the guide (1) continuously also along the rotor blade inner wall.

7. Rotor blade according to one of the preceding claims, **characterized in that** the lightning receptor (4) is constructed as a rotor blade tip and has at the rotor blade inner side an adapter (4a) to which the end of the lightning conductor cable (2, 2a) is electrically conductively connected.

8. Method for production of a rotor blade according to one of claims 1 to 7, wherein a rotor blade shell (5) is produced, the guide component (30) is provided with the fastening means (31), the portion of the lightning conductor cable (2, 2a) is introduced into the fastening means (31), the guide component (30) with the lightning conductor cable (2, 2a) is applied to the inner wall of the rotor blade shell (5), and the insulator (50) is provided in the guide (1) between the portion of the lightning conductor cable (2, 2a) and the rotor blade inner wall along the entire portion of the lightning conductor cable (2, 2a).

9. Method according to claim 8, **characterised in that** the guide component (30) with the portion of the lightning conductor cable (2, 2a) is overlaminated and the laminate is moulded as an integral laminate layer (40) into the rotor blade shell (5).

10. Method according to claim 8, **characterised in that** the guide component (30) and the portion of the lightning conductor cable (2, 2a) are produced as a separate component and provided with an adhesive layer (33) and then with the adhesive layer (33) are adhered to the inner wall of the rotor blade shell (5), wherein the insulator (50) is arranged between the lightning conductor cable (2, 2a) and the adhesive layer (33).

11. Method according to claim 10, **characterised in that** the inner wall of the rotor blade shell (5) is provided with markings, with the aid of which the separate component is adhered to the inner wall at a predetermined position.

## Revendications

1. Pale de rotor avec
une entretoise (3) avec une extrémité d'entretoise côté pointe (3a) et un câble parafoudre (2, 2a), qui passe le long de l'entretoise (3) qui est relié en étant électroconducteur avec une extrémité à un récepteur de foudre (4, 8), et avec un point de départ (16, 20) à l'extrémité d'entretoise côté pointe (3a) à partir duquel le câble parafoudre (2, 2a) part de l'entretoise (3),
cependant qu'un guidage (1) est placé sur une paroi intérieure de la pale de rotor (10) entre l'extrémité d'entretoise côté pointe (3a) et le récepteur de foudre (4, 8), guidage, le long duquel s'étend une section du câble parafoudre (2, 2a), **caractérisée en ce qu'**il est prévu un isolateur (50) dans le guidage (1) entre la section du câble parafoudre (2, 2a) et la paroi intérieure de la pale de rotor le long de l'ensemble de la section du câble parafoudre (2, 2a) et que le guidage (1) présente un composant de guidage (30) avec un moyen de fixation (31) pour le logement de la section du câble parafoudre (2, 2a).

2. Pale de rotor selon la revendication 1,
**caractérisée en ce qu'**il est prévu au moins un endroit de répartition (20) le long d'une ligne principale (2) du câble parafoudre et qu'un sous-conducteur (2a) du câble parafoudre (2, 2a) part de l'endroit de répartition (20) vers au moins un autre récepteur de foudre (8) et qu'au moins un autre guidage (1) est placé entre le au moins un endroit de répartition (20) et le au moins un autre récepteur de foudre (8).

3. Pale de rotor selon la revendication 1 ou 2,
**caractérisée en ce que** le récepteur de foudre (4) est placé à une pointe de la pale de rotor et/ou les autres récepteurs de foudre (8) sont placés le long d'une arête postérieure de la pale de rotor.

4. Pale de rotor selon la revendication 1,
**caractérisée par** au moins une couche de laminé (32, 40), placée du côté du moyen de fixation (31) qui est intérieur par rapport à la pale de rotor, qui recouvre complètement la section du câble parafoudre (2, 2a) qui est fixée avec le moyen de fixation (31).

5. Pale de rotor selon l'une des revendications précédentes,
**caractérisée en ce que** le au moins un guidage (1) en tant que composant séparé est configuré avec le composant de guidage (30), avec le moyen de fixation (31) et le câble parafoudre (2, 2a) fixé avec le moyen de fixation (31) et une couche de colle (33) opposée au moyen de fixation (31) qui doit être appliquée sur la paroi intérieure de la pale de rotor et avec une couche de laminé séparée (32) qui recouvre le composant de guidage (30).

6. Pale de rotor selon l'une des revendications précédentes,
**caractérisée en ce que** le au moins un guidage (1) est recouvert d'une couche de laminé intégrale (40) qui s'étend en continu au-delà du guidage (1) même le long de la paroi intérieure de la pale de rotor.

7. Pale de rotor selon l'une des revendications précédentes,
**caractérisée en ce que** le récepteur de foudre (4) est configuré comme une pointe de pale de rotor et présente, sur le côté intérieur de la pale de rotor, une nervure d'adaptateur (4a) avec laquelle l'extrémité du câble parafoudre (2, 2a) est reliée en étant électroconductrice.

8. Procédé pour la fabrication d'une pale de rotor selon l'une des revendications 1 à 7, une coque de la pale de rotor (5) étant fabriquée, le composant de guidage (30) étant pourvu du moyen de fixation (31), la section du câble parafoudre (2, 2a) étant mise en place dans le moyen de fixation (31), le composant de guidage (30) étant appliqué sur la paroi intérieure de la coque de la pale de rotor (5) avec le câble parafoudre (2, 2a) et l'isolateur (50) étant prévu dans le guidage (1) entre la section du câble parafoudre (2, 2a) et la paroi intérieure de la pale de rotor le long de l'ensemble de la section du câble parafoudre (2, 2a).

9. Procédé selon la revendication 8,
**caractérisé en ce que** le composant de guidage (30) est surlaminé avec la section du câble parafoudre (2, 2a) et le laminé y est intégré par moulage en tant que couche de laminé intégrale (40) dans la coque de la pale de rotor (5).

10. Procédé selon la revendication 8,
**caractérisé en ce que** le composant de guidage (30) et la section du câble parafoudre (2, 2a) sont fabriqués comme composant séparé et sont pourvus d'une couche de colle (33) et sont ensuite collés avec la couche de colle (33) sur la paroi intérieure de la pale de rotor (5), l'isolateur (50) étant placé entre le câble parafoudre (2, 2a) et la couche de colle (33).

11. Procédé selon la revendication 10,
**caractérisé en ce que** la paroi intérieure de la coque de pale de rotor (5) est pourvue de marquages à l'aide desquels le composant séparé est collé à un endroit prédéterminé sur la paroi intérieure.
